# EUROPÄISCHE PATENTSCHRIFT

(11) **EP 1 282 653 B1**
(45) Veröffentlichungstag und Bekanntmachung des Hinweises auf die Patenterteilung: **28.05.2008**
(21) Anmeldenummer: 01955354.4
(22) Anmeldetag: 17.07.2001
(51) Int. Cl.: C08F 120/00, C08L 33/12, C08K 5/00

(54) **VERBESSERTES SOLARIENLIEGENMATERIAL**
IMPROVED SOLAR BED MATERIAL
MATERIAU AMELIORE POUR LIT D'EXPOSITION SOLAIRE

(30) Priorität: 11.08.2000 DE 10040060
(43) Veröffentlichungstag der Anmeldung: 12.02.2003
(73) Patentinhaber: Evonik Röhm GmbH, 64293 Darmstadt (DE)
(72) Erfinder: SERVATY, Sabine, 54534 Grosslitten (DE); NEEB, Rolf, 64319 Pfungstadt (DE); ITTMANN, Günther, 64823 Gross-Umstadt 7 (DE)
(86) Internationale Anmeldenummer: PCT/EP2001/008230
(87) Internationale Veröffentlichungsnummer: WO 2002/014388

(56) Entgegenhaltungen:
- EP-A- 0 164 663
- EP-A- 0 324 940
- DE-C- 19 750 434

## Beschreibung

### Gebiet der Erfindung

Die vorliegende Erfindung betrifft ein verbessertes Material zur Abdeckung der UV-Lampen bei Solarliegen.

### Stand der Technik

Aus EP 0016870 sind bereits Kunststoffe auf Basis von Methylmethacrylat bekannt, die eine hohe Durchlässigkeit für UV-A-Strahlung (315-380 nm) und für UV-B-Strahlung (280-315 nm) haben. Ihre hohe UV-Durchlässigkeit bleibt auch bei langandauernder Strahlungseinwirkung erhalten, wenn der Kunststoff eine geringe Menge eines sterisch gehinderten Amins enthält. Entsprechende Verbindungen fangen Radikale ab, die sich bei Strahlenbelastung bilden und die sonst das Kunststoffmaterial langsam zerstören würden. Solche Zusätze sind in der japanischen Patentschrift JP 03 47,856 beschrieben und werden als "hindered amine light stabilizers", abgekürzt "HALS" bezeichnet.
Auch in der DE-OS 34 21 859 werden Kunststoffe auf Polymethylmethacrylat (PMMA)-Basis beschrieben, die sterisch gehinderte Amine enthalten und hohe UV-Durchlässigkeit besitzen.

Bisher wurde Plexiglas^{®} GS 2458 (Handelsprodukt der Röhm GmbH) zur Abdeckung der UV-Lampen von Solarienliegen benutzt. Das Material ist pflegeleicht und gut für die bräunende UV-Strahlung durchlässig. Die Dicke der verwendeten Abdeckungen lag zwischen 3-8 mm.

Da sowohl die Strahlungsleistung der UV-Lampen insgesamt als auch der UVB-Anteil der Strahlung im Lauf der technischen Entwicklung erhöht wurde, tritt bei Standardmaterialien bei Dicken > 4 mm ab ca. 20 Stunden Bestrahlung eine deutliche Reduzierung der Transmission ein.
Ergebnisse der Bestrahlung
hier: Standardrezeptur (Plexiglas^{®} 2458), 8mm Dicke, getempert (30 Min, 160°C), Lampe: Lichtkasten, Ergoline SR Turbopower-Lampen, 9 Röhren:

| | | | | | |
|---|---|---|---|---|---|
| Bestrahlungsdauer (h) | 0 | 50 | 125 | 275 | 475 |
| Transmission bei 315 nm in % | 80 | 60 | 45 | 33 | 25 |

Es bildet sich im Inneren der Platte eine gelbe Verfärbung, der sogenannte Gelbkern. Das UV-Licht wird absorbiert, der Kunde wird nicht mehr braun, die Platte muss relativ früh ausgetauscht werden.

### Aufgabe

Es besteht also die Aufgabe, ein Material zur Verfügung zu stellen, das auch bei heute üblicher Lampenstärke nicht oder nur unwesentlich vergilbt und dabei hohe UV-Transmission aufweist. Gleichzeitig muß darauf geachtet werden, dass die Zusatzstoffe, die die Entstehung des Gelbkerns verhindern, physiologisch unbedenklich sind. Es dürfen nur Substanzen zugesetzt werden, die von der FDA zugelassen sind und die den EU- und BGA-Richtlinien entsprechen. Es sollen Platten zur Verfügung gestellt werden, die auch bei den heute üblichen Strahlerleistungen und Materialdicken von mehr als 4 mm keinen Gelbkern aufweisen. Die hohen Dicken von mehr als 4 mm sind erforderlich, da die Abdeckung der UV-Lampen freitragend ausgeführt wird und die Platten thermisch bei ca. 160 °C umgeformt werden.

### Lösung

Gute UV-Transmission über einen langen Zeitraum ist ein Haupterfordernis für Solarienmaterial.

Es wurde nun gefunden, dass die Aufgabe durch Zugabe von Alkoholen, Alkoholgemischen und auch Wasser und/oder weiteren Verbindungen zur Monomermischung der Standardrezeptur gelöst wird. Im folgenden wird die jeweils eingesetzte Verbindung oder das Gemisch als aktive Komponente bezeichnet. Als Alkohole kommen ein- oder mehrwertige C₁-C₁₀ Alkohole in Frage, die auch verzweigt sein können, wie beispielsweise Methanol, Ethanol, Propanol, Isopropanol oder tert.-Butanol oder Pentanole. Eine weitere Verbesserung kann durch die Verwendung von weiteren Verbindungen erreicht werden, wie beispielsweise Vinylverbindungen, Butyllactat und Siloxanen sowie Mischungen aus den vorgenannten Verbindungen. Unter den Vinylverbindungen werden Vinylester aliphatischer Carbonsäuren, wie beispielsweise Vinylacetat verstanden. Ferner können Vinylester der allgemeinen Formel I eingesetzt werden: 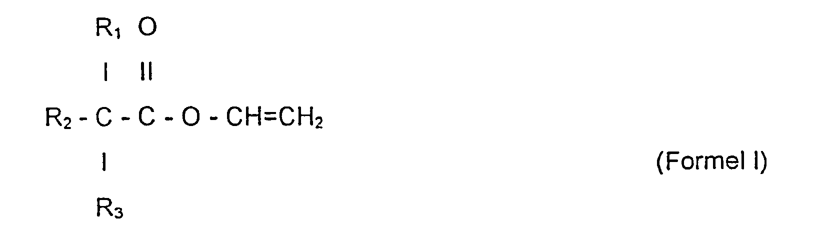 wobei gilt:
R₁, R₂ und R₃ sind Alkylgruppen, wobei mindestens ein Rest eine Methylgruppe ; darstellt. Die Gesamtzahl der Kohlenstoffatome in den Resten R₁-R₃ beträgt 9, 10 oder 11.

Die Verbindungen der Formel 1 sind unter dem Namen VeoVa9 (9 Kohlenstoffatome, R₁-R₃) bzw. VeoValO (10 Kohlenstoffatome, R₁-R₃) oder VeoVa11 (11 Kohlenstoffatome, R₁-R₃) bei der Firma Shell Chemicals erhältlich.

Die Alkohole, Alkoholgemische oder weitere aktive Komponenten werden in Mengen von 0,1-10 Gew-% zu der Monomermischung zugemischt. Bevorzugt sind Gehalte von 0,2 - 8 Gew.-% an aktiven Komponenten , besonders bevorzugt sind Gehalte von 0,2 bis 6 Gew.-% an aktiven Komponenten.

Die Monomermischung besteht aus 85 - 95 Gew.-% Methylmethacrylat. Zusammensetzung der Standardrezeptur:
- 93,85 Gew.-%: Methylmethacrylat
- 6 %: Acetyltributylcitrat (als Weichmacher) Citrofol B2 (Fa. Jungbunzlauer)
- 0,1 Gew.-%: Tinuvin 770 (Ciba) (HALS)
- 0,05 Gew.-%: Initiator

Als Initiator können die der Gußpolymerisation üblichen Initiatoren eingesetzt werden, siehe H. Rauch-Puntigam, Th. Völker in "Acryl- und Methacrylverbindungen", Springer-Verlag 1967; Houben-Weyl, 4. Auflage, Band XIV/1, Makromolekulare Stoffe, Teil 1. S. 1010 - 1078, Georg Thieme Verlag 1961).

Als Weichmacher können Acetyltributylcitrat oder Triethylcitrat verwendet werden. Der Weichmacher kann ggf. auch weggelassen werden.

### Beispiele

### Allgemeine Herstellungsvorschrift

Die Standardrezeptur und die Gemische aus aktiven Verbindungen werden innig vermischt, in Glaskammern, abgedichtet mit einer Profilschnur aus PVC, eingefüllt und im Wasserbad bei folgendem Temperatur-Zeit-Profil polymerisiert:

| | | | |
|---|---|---|---|
| Dauer (h) | 6-7 | 15 | 4 |
| Temperatur (°C) | 46 | 40 | 100 |

Nach dem ersten Polymerisationsschritt wird die Profilschnur entfernt. Nach dem 2. Polymerisationsschritt erfolgt die Endpolymerisation bei erhöhter Temperatur. Gegebenenfalls kann nochmals bei erhöhter Temperatur (160 °C) getempert werden.

Die entstandene PMMA-Platte wird zugeschnitten (100 x 30 x 8 mm) und belichtet. Die Belichtung der Proben erfolgte mit Philips UVA + UVB Performance Einzellampen oder mit Ergoline Turbopower Einzellampen oder auf einem Ergoline-Lichtkasten mit 9 Ergoline Turbopower-Lampen.

Die Lampe Ergoline SR Turbopower (Hersteller IK Licht GmbH, Artikel Nr. 1085518) hat 160 W elektrische Leistung und einen UVA Strahlungsfluß von 38 Watt.

### Beispiele

### Beispiel 1 - Standardrezeptur

| | | | | | |
|---|---|---|---|---|---|
| Zeit (h) | 0 | 67 | 115 | 223 | 731 |
| Transmission tau (315 nm) | 80 | 53 | 46 | 33 | 17 |

Die Belichtung erfolgt auf Ergoline SR Turbopower

### Beispiel 2

Zusammensetzung:
Standard +
0,095 Gew.-% Methanol
0,95 Gew.-% Ethanol
0,95 Gew.-% Isopropanol
0,5 Gew.-% H₂O

Der MMA-Gehalt der Standardrezeptur wurde entsprechend verringert.

| | | | | | |
|---|---|---|---|---|---|
| Zeit (h) | 0 | 5 | 117 | 213 | 577 |
| Transmission tau (315 nm) | 81 | 75 | 83 | 85 | 87 |

Die Belichtung erfolgt auf Ergoline SR Turbopower

Die Prozentangaben plus Standard summieren sich zu 100 % , die Menge an Methylmethacrylat wird entsprechend des Gehalts an aktiven Verbindungen reduziert.

### Beispiel 3

Zusammensetzung:
Standard +
0,095 Gew.-% Methanol
0,95 Gew.-% Ethanol
0,95 Gew.-% Isopropanol
0,5 Gew.-% Butyllactat

| | | | | | |
|---|---|---|---|---|---|
| Zeit (h) | 0 | 20 | 133 | 329 | 464 |
| Transmission tau (315 nm) | 83 | 70 | 85 | 87 | 88 |

Die Belichtung erfolgt im Ergoline SR Turbopower-Lichtkasten

Als weiterer positiver Effekt der Alkoholzugabe wurde überraschenderweise gefunden, dass der Gehalt an Restmonomeren (REMO), gemessen als Methylmethacrylat, von den üblichen 0,3 - 0,4 Gew.-% auf 0,2 Gew.-% absinkt.

Besonders starke Verringerung des REMO-Gehaltes ergibt sich bei der Verwendung von Alkohol und Vinylacetat. Hier sinkt der REMO-Gehalt auf 0,019 Gew.-%.

### REMO-Gehalte

| Beispiel | Gew.% (als Methylmethacrylat) |
|---|---|
| 1 | 0,41 |
| 2 | 0,22 |
| 3 | 0,19 |
| 4 | 0,019 |
| 5 | nicht bestimmt |
| 6 | 0,067 |
| 7 | 0,031 |

Die REMO-Gehalte wurden mittels Dampfraum-Gaschromatographie bestimmt.

### Beispiel 4

Standard +
0,5 Gew.-% H₂O
0,95 Gew.-% Ethanol
0,5 Gew.-% Vinylacetat

| | | | | | |
|---|---|---|---|---|---|
| Zeit (h) | 0 | 96 | 252 | 384 | 636 |
| Transmission tau (315 nm) | 82 | 72 | 81 | 84 | 86 |

Die Belichtung erfolgt im Ergoline SR Turbopower-Lichtkasten

### Beispiel 5

Standard +
0,095 Gew.-% Methanol
0,95 Gew.-% Isopropanol
1,0 Gew.-% Vinylacetat

| | | | | |
|---|---|---|---|---|
| Zeit (h) | 0 | 16 | 196 | 475 |
| Transmission tau (315 nm) | 82 | 76 | 83 | 87 |

Die Belichtung erfolgt im Ergoline SR Turbopower-Lichtkasten

### Beispiel 6

Standard +
0,095 Gew.-% Methanol
1,0 Gew.-% VEOVA 10
0,95 Gew.% Ethanol

| | | | | | |
|---|---|---|---|---|---|
| Zeit (h) | 0 | 20 | 63 | 150 | 500 |
| Transmission tau (315 nm) | 83 | 71 | 76 | 81 | 87 |

Die Belichtung erfolgt im Ergoline SR Turbopower-Lichtkasten

| | | | |
|---|---|---|---|
| Zeit (h) | 1000 | 1500 | 2000 |
| Transmission tau (315 nm) | 89 | 90 | 90 |

Die Belichtung erfolgt im Ergoline SR Turbopower-Lichtkasten

### Beispiel 7

Rezeptur gemäß Beispiel 6, aber mit 3 Gew.-% VEOVA10 und 3 % Citrofol B2

| | | | | | | | |
|---|---|---|---|---|---|---|---|
| Zeit (h) | 0 | 20 | 150 | 200 | 315 | 1000 | 2000 |
| Transmission tau (315 nm) | 83 | 75 | 77 | 77 | 79 | 85 | 87 |

Die Belichtung erfolgt im SR Turbopower-Lichtkasten

### Beispiel 8

Standardrezeptur +
0,095 Gew.-% Methanol
0,95 Gew.-% Ethanol
1,0 Gew.-% Butyllactat

| | | | | | |
|---|---|---|---|---|---|
| Zeit (h) | 0 | 40 | 128 | 380 | 783 |
| Transmission tau (315 nm) | 83 | 75 | 85 | 87 | 88 |

Die Belichtung erfolgt im Ergoline SR Turbopower-Lichtkasten

Die Transmission der erfindungsgemäßen Platten sinkt auch bei Belichtungen bei allen Beispielen > 1000 Stunden nicht ab. (außer bei Beispiel 1, "Standard")

### Beispiel 9

Standardrezeptur +
1,0% Methanol

| | | | |
|---|---|---|---|
| Zeit (h) | 500 | 1000 | 2000 |
| Transmission tau (315 nm) | 76 | 88 | 85 |

Die Belichtung erfolgt im Ergoline SR Turbopower-Lichtkasten

### Beispiel 10

Standardrezeptur +
0,8 % Methanol
0,5 % Wasser

| | | | | |
|---|---|---|---|---|
| Zeit (h) | 500 | 1000 | 2000 | 3000 |
| Transmission tau (315 nm) | 73 | 80 | 84 | 84 |

Die Belichtung erfolgt im Ergoline SR Turbopower-Lichtkasten

### Beispiel 11

Standardrezeptur +
0,2% Wasser
0,8 % Methanol

| | | | | | | |
|---|---|---|---|---|---|---|
| Zeit (h) | 0 | 67 | 100 | 250 | 500 | 700 |
| Transmission tau (315 nm) | 87 | 82 | 76 | 82 | 85 | 85 |

Philips UVB Performance

### Beispiel 12

Standardrezeptur +
0,5 % Wasser
0,5 % Methanol

| | | | |
|---|---|---|---|
| Zeit (h) | 112 | 206 | 275 |
| Transmission tau (315 nm) | 88 | 89 | 89 |

Die Belichtung erfolgt mit Ergoline SR Turbopower.

Vor der Belichtung wurde die Platte des Beispiels 12 für 30 Minuten bei 160° C getempert. Die Belichtung erfolgte durch Einzellampen.

## Patentansprüche

1. PMMA-Körper, herstellbar durch radikalische Polymerisation folgender Monomermischung:
88-95 Gew.-% Methylmethacrylat
0-7% Weichmacher
0,01 - 0,5 Gew.-% HALS-Verbindung
0,05 Gew.% Initiator und
0,1 - 10 Gew.% einer aktiven Komponente
**dadurch gekennzeichnet,**
**daß** als aktive Komponente Alkohole, Wasser, oder Vinylverbindungen Vinylacetat oder Verbindungen der Formel 1 oder Butyllactat einzeln oder in Mischungen eingesetzt werden 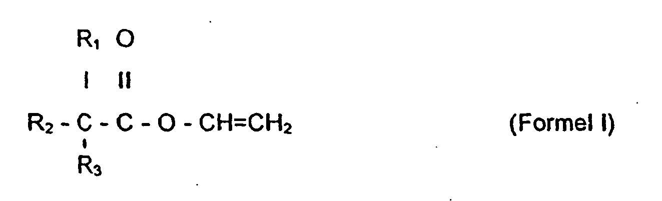 wobei gilt R₁, R₂ und R₃ sind Alkylgruppen, wobei mindestens ein Rest eine Methylgruppe darstellt, die Gesamtzahl der Kohlenstoffatome in den Resten R₁-R₃ beträgt 9, 10 oder 11.

2. PMMA-KÖrper nach Anspruch 1,
**dadurch gekennzeichnet,**
**daß** als Alkohole Methanol, Ethanol oder Propanol oder Isopropanol oder n-Butanol, sec-Butanol, tert.-Butanol oder Pentanole einzeln oder in Mischungen eingesetzt werden.

3. Verwendung der Körper nach einem der vorstehend genannten Ansprüche zur Abdeckung der Lampen in Solarienliegen.

4. Verwendung der Körper nach einem der vorstehend genannten Ansprüche als Verglasungsmaterial.

## Claims

1. PMMA product which can be produced by free-radical polymerization of the following monomer mixture:
88-95% by weight 0-7% methyl methacrylate plasticizer
0.01-0.5% by weight HALS compound
0.05% by weight initiator, and
0.1-10% by weight an active component
**characterized in that**
as active component use is made of alcohols, water, or vinyl compounds vinyl acetate or compounds of the formula I or butyl lactate individually or in mixtures 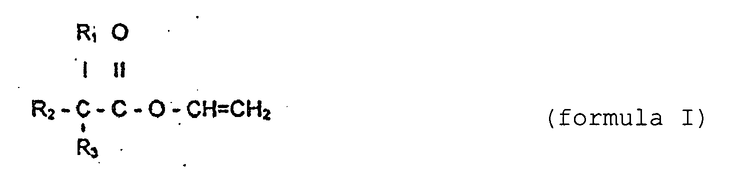 where R₁, R₂ and R₃ are alkyl groups, at least one radical being a methyl group, and the total number of carbon atoms in the radicals R₁-R₃ is 9, 10 or 11.

2. PMMA product according to Claim 1,
**characterized in that**
as alcohols use is made of methanol, ethanol, or propanol, or isopropanol, or n-butanol, sec-butanol, tert-butanol, or pentanols, individually or in mixtures.

3. Use of the products according to any of the abovementioned claims for protective covering of the lamps in sunbeds.

4. Use of the products according to any of the abovementioned claims as glazing material.

## Revendications

1. Corps à base de PMMA, pouvant être produits par polymérisation radicalaire du mélange de monomères suivant :
88-95 % en poids de méthacrylate de méthyle,
0-7 % en poids de plastifiant
0,01-0,5 % en poids de composé HALS (photo-protecteur de type amine à empêchement stérique)
0,05 % en poids d'amorceur et
0,1-10 % en poids d'un composant actif,
**caractérisé en ce qu'**on utilise en tant que composant actif des alcools, l'eau ou des composés vinyliques, l'acétate de vinyle ou des composés de formule I ou le lactate de butyle, individuellement ou en mélanges 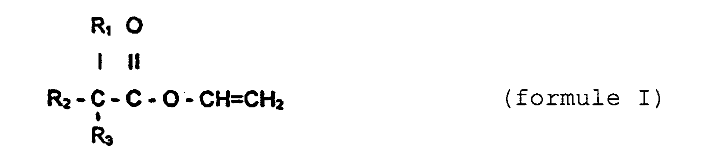 où R₁, R₂ et R₃ sont des groupes alkyle, au moins un radical représentant un groupe méthyle, le nombre total des atomes de carbone dans les radicaux R₁-R₃ étant 9, 10 ou 11.

2. Corps à base de PMMA selon la revendication 1, **caractérisés en ce qu'**on utilise comme alcools le méthanol, l'éthanol ou le propanol ou l'isopropanol ou le n-butanol, le sec-butanol, le tert-butanol ou des pentanols, individuellement ou en mélanges.

3. Utilisation des corps selon l'une quelconque des revendications précédentes, pour le recouvrement des lampes dans des solariums.

4. Utilisation des corps selon l'une quelconque des revendications précédentes, en tant que matériau de vitrage.
